# EUROPÄISCHE PATENTSCHRIFT

(11) **EP 2 601 576 B1**
(45) Veröffentlichungstag und Bekanntmachung des Hinweises auf die Patenterteilung: **18.12.2019**
(21) Anmeldenummer: 12777887.6
(22) Anmeldetag: 08.10.2012
(51) Int. Cl.: G06F 9/4401, G06F 11/22

(54) **AUSWERTUNG DER DAUER DES NIEDERDRÜCKENS DES EINSCHALTERS ZUR AUSWAHL EINER VOLLSTÄNDIGEN ODER VERKÜRZTEN BOOT-SEQUENZ EINES PC**
EVALUATION OF THE DURATION OF THE PRESSING OF THE ON-OFF SWITCH IN ORDER TO SELECT A COMPLETE OR ABBREVIATED BOOT SEQUENCE OF A PC
ÉVALUATION DE LA DURÉE D'ENFONCEMENT D'UN CONJONCTEUR POUR LE CHOIX D'UNE SÉQUENCE D'AMORÇAGE COMPLÈTE OU RACCOURCIE D'UN PC

(30) Priorität: 13.10.2011 DE 102011115853
(43) Veröffentlichungstag der Anmeldung: 12.06.2013
(73) Patentinhaber: Fujitsu Technology Solutions Intellectual Property GmbH, 80807 München (DE)
(72) Erfinder: FREUDENSCHUSS, Reinhold, 86199 Augsburg (DE); VOGL, Bernhard, 86504 Merching (DE); SCHNEIDER, Stephan, 86480 Aletshausen (DE)
(74) Vertreter: Epping - Hermann - Fischer
(86) Internationale Anmeldenummer: PCT/EP2012/069870
(87) Internationale Veröffentlichungsnummer: WO 2013/053672

(56) Entgegenhaltungen:
- WO-A1-2011/115621
- US-A1- 2002 144 030
- US-A1- 2006 064 571
- US-A1- 2006 212 550

## Beschreibung

Die Erfindung betrifft ein Arbeitsverfahren für ein Computersystem mit einer Systemfirmware und einem Bedienelement zum Einschalten des Computersystems. Die Erfindung betrifft darüber hinaus ein Computersystem umfassend wenigstens ein Bedienelement zum Einschalten des Computersystems, das zur Durchführung des Verfahrens geeignet ist.

Bekannte Computersysteme, wie beispielsweise PC-Desktop-Systeme oder Laptops, führen in der Regel einen mehrstufigen Startprozess aus. In einer ersten Phase, die in der Regel als Power-on Self-Test (POST) bezeichnet wird, wird eine grundlegende Initialisierung und Überprüfung der verwendeten Hardware unter Kontrolle einer in einem nichtflüchtigen Speicherbaustein gespeicherten Systemfirmware durchgeführt. In dieser Phase wird beispielsweise die Größe des vorhandenen Hauptspeichers festgestellt und optional dessen Funktionalität überprüft. Auf eine entsprechende Aufforderung eines Benutzer hin können in dieser Phase auch hardwarenahe Einstellungen über einen Einstellungsdialog der Systemfirmware vorgenommen werden. In einer nachfolgenden Phase wird das eigentliche Betriebssystem von einem Speichermedium des Computersystems geladen. In dieser Phase werden auch zusätzliche, betriebssystemspezifische Treibermodule für einzelne Komponenten des Computersystems nachgeladen und initialisiert.

Ein Problem bekannter Computersysteme liegt darin, dass der Startvorgang verhältnismäßig viel Zeit in Anspruch nimmt. Dies wird von Benutzern als störend empfunden und führt dazu, dass Computersysteme oft nicht ausgeschaltet werden.

Aus der Druckschrift US 2006/0064571 A1 sind Systeme und Verfahren bekannt, die effiziente Startprozeduren bei Computersystemen bereitstellen. In einer Ausführungsform wird eine von mehreren verschiedenen Codesequenzen zum Booten ausgeführt, basierend auf einer Konfiguration eines Benutzers. In einer anderen Ausführungsform wird ein einzelner Startknopf bereitgestellt und ein Benutzer wählt unter Benutzung einer Maus eine Betriebskonfiguration aus. In dieser Ausführungsform kann das System spezifisch zugeschnittene Routinen verwenden.

Aus der Druckschrift US 2006/212550 A1 ist ein Computersystem bekannt, bei dem ein Nutzer durch unterschiedlich lange Betätigung eines Einschaltknopfes zwischen zwei verschiedenen POST-Prozessen auswählen kann. Ein Controller misst die Dauer der Betätigung des Einschaltknopfes und speichert eine entsprechende Information in einem Register des Controllers. Bei dem nachfolgenden Starten des Computers ruft das BIOS die gespeicherte Information aus dem Controller ab und startet abhängig davon den entsprechenden POST-Prozess.

Aus der Druckschrift WO 2011/115621 A1 ist eine Vorrichtung und ein Verfahren zum Zugang zu einer Pre-Boot-Routine bekannt. Falls ein Benutzer die Pre-Boot-Routine aufrufen möchte, betätigt er einen Startknopf ein zweites Mal in einer kurzen vorbestimmten Zeitspanne.

Aus der Druckschrift US 2002/144030 A1 ist eine Vorrichtung und ein Verfahren zum selektiven Laden unterschiedlicher Software-Routinen bei einem Starten eines Computersystems bekannt. In Abhängigkeit davon, ob ein Nutzer einen Einschaltknopf des Computersystems für eine vorbestimmte Zeitspanne beim Einschalten gedrückt hält, wird ein erstes oder ein zweites Set von Software-Routinen geladen.

Aufgabe der vorliegenden Anmeldung ist es, ein Computersystem und ein Arbeitsverfahren für ein Computersystem anzugeben, die einen Startvorgang des Computersystems beschleunigen.

Die oben genannte Aufgabe wird durch ein Arbeitsverfahren für ein Computersystem und ein Computersystem entsprechend der unabhängigen Ansprüche gelöst.

Vorteilhafte Ausgestaltungen der Erfindung sind in den abhängigen Patentansprüchen sowie der nachfolgenden, ausführlichen Beschreibung von Ausführungsbeispielen angegeben.

Unterschiedliche Ausführungsbeispiele der Erfindung werden nachfolgend unter Bezugnahme auf die angehängten Figuren beschrieben. In den Figuren zeigen:
- Figur 1: ein Blockdiagramm eines Computersystems,
- Figur 2: ein Ablaufdiagramms eines Arbeitsverfahren gemäß einem ersten Ausführungsbeispiel,
- Figur 3: ein Ablaufdiagramms eines Arbeitsverfahren gemäß einem zweiten Ausführungsbeispiel und
- Figur 4: eine schematische Darstellung unterschiedlicher Bootsequenzen.

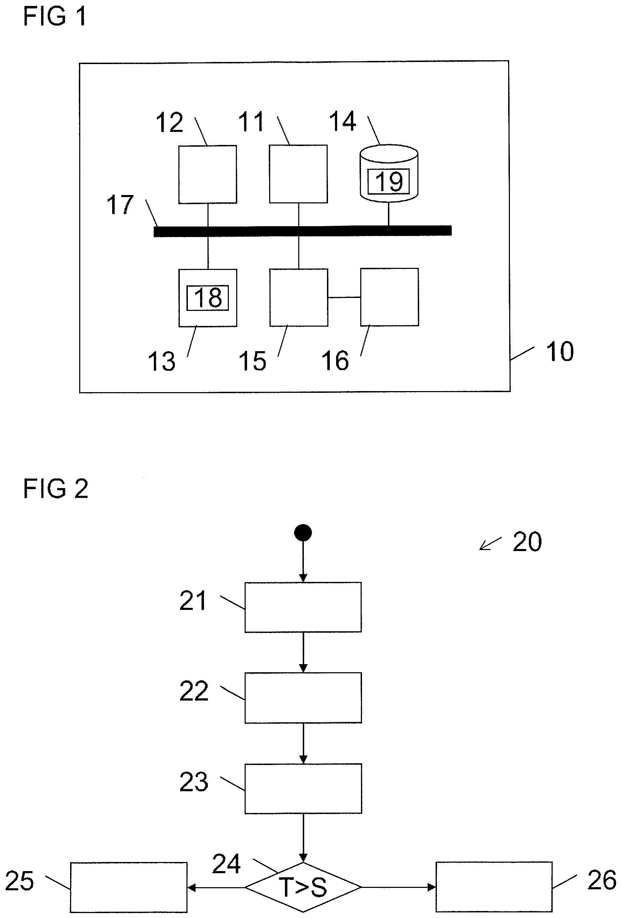

Das Blockdiagramm gemäß Figur 1 zeigt schematisch ein Computersystem 10. Das Computersystem 10 umfasst im Ausführungsbeispiel einen Prozessor 11, einen Arbeitsspeicher 12 und einen nichtflüchtigen Speicherbaustein 13. Das Computersystem 10 umfasst des Weiteren ein Festplattenlaufwerk 14, einen allgemeinen Ein-/Ausgabebaustein 15 (englisch: GPIO) und ein mit einem Eingang des Ein-/Ausgabebausteins 15 verbundenes Bedienelement in Form eines Tasters 16. Die Komponenten 11 bis 15 des Computersystems 10 sind über einen Systembus 17 miteinander verbunden. Anstelle des in der Figur 1 schematisch dargestellten Systembusses 17 können selbstverständlich auch eine Mehrzahl von unterschiedlichen Bussystemen oder anderen Verbindungen zur Verbindung einzelner Komponenten eines Computersystems Verwendung finden.
Der Prozessor 11 dient zum Ausführen von in dem Arbeitsspeicher 12 oder dem Speicherbaustein 13 gespeicherten Programmcode. In dem beschriebenen Ausführungsbeispiel ist in dem nichtflüchtigen Speicherbaustein 13 wenigstens eine Systemfirmware 18 abgelegt, die unter anderem zum Starten des Computersystems 10 dient. Bei der Systemfirmware 18 handelt es sich beispielsweise um ein so genannten BIOS (Basic Input/Output System) Programm oder um eine Firmware gemäß dem (Unified) Extensible Firmware Interface (UEFI bzw. EFI) Standard. Auf dem Festplattenlaufwerk 14 ist weiterer ausführbarer Programmcode, insbesondere der Programmcode eines Betriebssystems 19 gespeichert.

In einem so genannten Standby- oder Bereitschaftszustand wird der Ein-/Ausgabebaustein 15 mit einer Bereitschaftsspannung versorgt und überwacht den Taster 16 auf Betätigung. Wird der Taster 16 betätigt, wird das Computersystem 10 durch Bereitstellung einer Versorgungsspannung an dessen verbleibende Komponenten 11 bis 14 gestartet. Dabei wird durch den Prozessor 11 zunächst ein so genannter Bootblock der Systemfirmware 18 aus dem nichtflüchtigen Speicher 13 ausgeführt. Nachfolgend wird weiterer ausführbarer Programmcode der Systemfirmware 18 entweder direkt aus dem nichtflüchtigen Speicher 13 ausgeführt oder von dort in den Arbeitsspeicher 12 kopiert und dann durch den Prozessor 11 ausgeführt. Nach Ausführung der Systemfirmware 18 wird dann ausführbare Code des Betriebssystem 19 von dem Festplattenlaufwerk 14 in den Arbeitsspeicher 12 geladen und durch den Prozessor 11 ausgeführt.

Um den Startvorgang des Computersystems 10 möglichst effizient zu gestalten, wird dabei beispielsweise ein Verfahren 20 gemäß Figur 2 verwendet.
In einem ersten Schritt 21 wird ein Einschaltsignal erfasst. Bei dem Erfassen des Einschaltsignals kann es sich beispielsweise um das physikalische Anlegen einer Spannung an das Computersystem 10 oder um das Betätigen des Tasters 16 oder sonstigen Bedienelements handeln.

In einem nachfolgenden Schritt 22 werden grundlegende Routinen einer Systemfirmware 18 ausgeführt. Dabei handelt es sich beispielsweise um das Ausführen eines Bootblocks, eine Initialisierung des Arbeitsspeichers 12 und das nachfolgende Laden von Teilen der Systemfirmware 18 von dem nichtflüchtigen Speicherbaustein 13 in den Arbeitsspeicher 12 des Computersystems 10. Diese und ähnliche Vorgänge werden bisweilen mit dem englischen Ausdruck "early POST tasks" bezeichnet.

Nachdem die grundlegende Initialisierung des Computersystems 10 abgeschlossen ist, wird in einem Schritt 23 ermittelt, wie lange der Taster 16 niedergedrückt wurde. Hierzu wird beispielsweise ein in dem Ein-/Ausgabebaustein 15 angeordneter Zeitgeber abgefragt.

Im Schritt 24 wird der im Schritt 23 ermittelte Betätigungszeitraum T mit einem vorgegebenen Zeitraum S zum Aufrufen einer vollständigen Bootsequenz verglichen. Der vorgegebene Zeitraum S sollte so gewählt werden, dass es für einen Benutzer problemlos möglich ist, zwischen einer kurzen Betätigung und einer langen Betätigung zu unterscheiden. Ein üblicher Tastendruck dauert in der Regel nur einen Bruchteil einer Sekunde. Dementsprechend eignet sich als vorgegebener Zeitraum S beispielsweise ein Zeitraum von wenigen Sekunden, beispielsweise einer, zwei, drei oder vier Sekunden.

Wird im Schritt 24 erkannt, dass der Taster 16 für einen Zeitraum T betätigt wurde, der kürzer als der vorgegebener Zeitraum S ist, wird im Schritt 25 unmittelbar weiterer Programmcode der Systemfirmware 18 zum Starten des Computersystems ausgeführt. Beispielsweise kann im Schritt 25 Programmcode zur Initialsierung eines Festplattencontrollers und ein so genannter Boot- oder OS-Loader ausgeführt werden, um nachfolgend das Betriebssystem 19 von dem Festplattenlaufwerk 14 zu laden.

Wird im Schritt 24 hingegen erkannt, dass der Taster 16 für einen Zeitraum T betätigt wurde, der länger ist als der vorgegebene Zeitraum S, wird in einem nachfolgenden Schritt 26 eine vollständige Bootsequenz ausgeführt. Beispielsweise kann eine Tastatur oder sonstige Eingabekomponente des Computersystems 10 initialisiert werden. Zusätzlich können auch Ausgabekomponenten wie beispielsweise eine Grafikkomponente des Computersystems 10 aktiviert werden. Alternativ oder zusätzlich kann auch ein erweiterter Selbsttest, wie beispielsweise ein Speichertest des Computersystems, durchgeführt werden. Schließlich kann auch ein Einstellungsdialogs der Systemfirmware aufgerufen und angezeigt werden. Durch das in Figur 2 dargestellte Arbeitsverfahren 20 kann durch unterschiedlich langes Betätigen des Bedienelements zwischen zwei unterschiedlichen Bootsequenzen des Computersystems gewählt werden. Insbesondere kann eine eingeschränkte Bootsequenz zum schnellen Starten des Computersystems oder eine vollständige Bootsequenz zu Wartungszwecken ausgewählt werden. Die Abfrage des Tasters 16 und die Bestimmung dessen Betätigungszeitraums wird durch den systemnahen Ein-/Ausgabebaustein 15 und einen beispielsweise darin angeordneten Zeitgeber vorgenommen werden. Somit ist keine Kommunikation mit einer möglicherweise externen Tastatur des Computersystems 10 nötig, so dass insbesondere auf eine vorherige Initialisierung der Tastatur oder sonstiger Komponenten verzichtet werden kann.

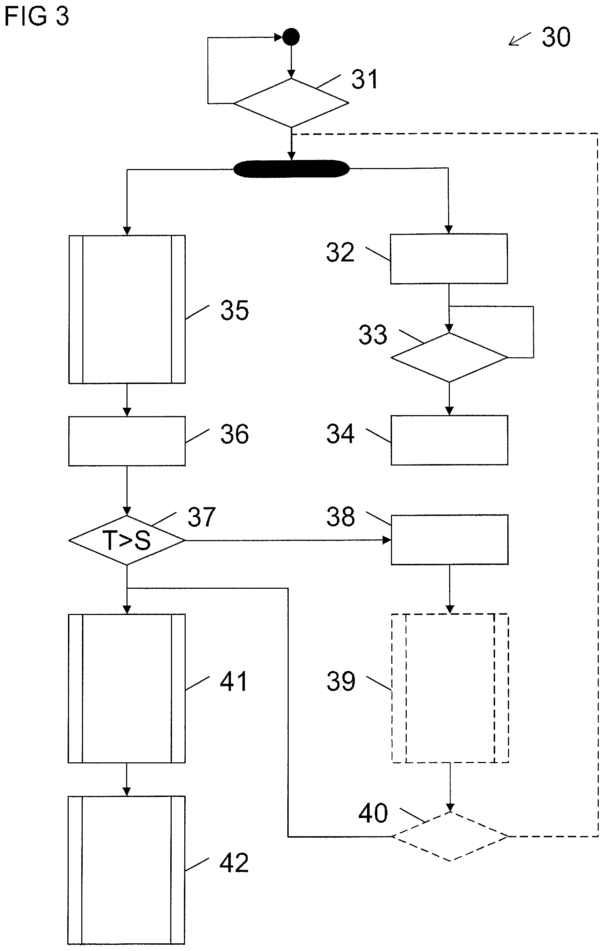

Figur 3 zeigt ein Ablaufdiagramm gemäß eines weiteren Arbeitsverfahren 30 zum Starten des Computersystems 10.

Nach dem Anlegen einer Stromversorgung an das Computersystem 10 befindet sich dies zunächst in einem Standby- oder Bereitschaftszustand. In einem Schritt 31 wird überprüft, ob der Taster 16 niedergedrückt wurde. Ist dies nicht der Fall, verbleibt das Computersystem 10 weiterhin in dem Bereitschaftszustand.

Andernfalls, das heißt, wenn der Taster 16 niedergedrückt wurde, wird im Schritt 32 ein Zeitgeber gestartet. Bei dem Zeitgeber kann es sich beispielsweise um einen Timer des Ein-/Ausgabebausteins 15 oder eines so genannten Real-Time-Clock-Bausteins (englisch: RTC) des Computersystems 10 handeln. In einem nachfolgenden Schritt 33 wird überprüft, ob der Taster 16 losgelassen wurde. Ist dies nicht der Fall, wird die Prüfung 33 so lange fortgesetzt, bis ein Loslassen des Tasters 16 erkannt wurde. Im Schritt 34 wird nach Erkennung eines Loslassens des Tasters 16 der Zeitgeber angehalten. Optional kann nach Überschreiten eines vorbestimmten Zeitraums zum Aufrufen der vollständigen Bootsequenz auch eine kurze Signalisierung vorgenommen werden, um einem Benutzer anzuzeigen, dass er den Taster 16 nicht länger betätigen muss, um die vollständige Bootsequenz aufzurufen. Beispielsweise kann eine zur Signalisierung des Einschaltzustands verwendete LED kurz aus- und wieder eingeschaltet werden oder eine kurzer Signalton über einen Systemlautsprecher ausgeben werden.

Parallel zu den Schritten 32 bis 34 wird in einem Prozess 35 eine erste Initialisierungsphase des Computersystems 10 durchlaufen. Beispielsweise wird während der ersten Initialisierungsphase 35 der Typ eines Prozessors und der Typ und die Größe eines Arbeitsspeichers 12 bestimmt. Auch andere grundlegende Funktionen, wie beispielsweise des Kopieren der Systemfirmware 18 von dem nichtflüchtigen Speicherbaustein 13 in den Arbeitsspeicher 12 können in dem Prozess 35 vorgenommen werden.

Im beschriebenen Ausführungsbeispiel dauert der Prozess 35 mindestens so lange wie der vorbestimmte Zeitraum S zum Aktivieren der vollständigen Bootsequenz. Im nachfolgenden Schritt 36 kann somit ermittelt werden, ob der Taster 16 für einen Zeitraum T betätigt wurde, der länger ist als der vorbestimmte Zeitraum S. Hierzu wird im Schritt 36 beispielweise ein Wert des Zeitgebers ausgelesen oder eine Differenz zwischen einer im Schritt 34 ermittelten Stoppzeit und einer im Schritt 32 ermittelten Startzeit bestimmt. Ist der Taster 16 zum Zeitpunkt der Ausführung des Schritts 36 immer noch niedergedrückt, wurde der vorbestimmte Zeitraum S in jedem Fall überschritten. In diesem Fall kann beispielsweise der Zeitraum seit dem Niederdrücken des Tasters 16 oder ein vorbestimmter Maximalwert als Betätigungszeitraum T festgestellt werden.

Im Schritt 37 wird überprüft, ob der im Schritt 36 abgerufene Zeitraum T größer als der vorbestimmte Zeitraum S ist. Ist dies der Fall, wird in einem Schritt 38 zum Booten des Computersystems 10 nicht zwingend erforderlicher Programmcode der Systemfirmware 18 ausgeführt. Beispielsweise kann hierdurch eine Tastatur oder sonstigen Eingabekomponente initialisiert werden. Auch die Aktivierung eines bestimmten Grafikmodus einer Grafikkomponente ist möglich, beispielsweise um das Ergebnis eines erweiterten Selbsttests anzuzeigen.

In einem optionalen Prozess 39 wird zusätzlich ein Einstellungsdialog der Systemfirmware 18 durch den Prozessor 11 ausgeführt. Beispielsweise kann nach Betätigen einer zuvor angezeigten Tastenkombination eine Einstellungsmaske zum Vornehmen von grundlegenden, hardwarenahen Voreinstellungen für das Computersystem 10 auf einem Monitor des Computersystems 10 angezeigt und durch einen Benutzer manipuliert werden. In einer alternativen Ausgestaltung wird der Einstellungsdialog automatisch aufgerufen, wenn die vollständige Bootsequenz über eine lange Betätigung des Tasters 16 ausgewählt wurde.

Mittels des Einstellungsdialogs kann ein Nutzer des Computersystems 10 beispielsweise die Bootreihenfolge des Computersystems 10 festlegen. Auch andere, an sich bekannte Einstellungsmöglichkeiten einer Systemfirmware 18 sind möglich. Darüber hinaus kann optional auch die Länge des vorbestimmten Zeitraums S in dem Einstellungsdialog festgelegt werden. Hat der Benutzer seine Änderungen abgeschlossen oder verworfen, wird im Schritt 40 überprüft, ob zur Aktivierung der eventuell geänderten Systemeinstellungen ein Neustart des Computersystems 10 erforderlich ist. Ist dies der Fall, wird das Verfahren nach dem Schritt 31 fortgesetzt.

Falls im Schritt 37 erkannt wurde, dass der Taster 16 nur für einen verhältnismäßig kurzen Zeitraum betätigt wurde, oder falls im Schritt 40 festgestellt wurde, dass kein Neustart erforderlich ist, wird in einem Prozess 41 weiterer zum Booten des Computersystems 10 erforderlicher Programmcode der Systemfirmware 18 ausgeführt. Beispielsweise kann ein Teil der Systemfirmware 18 zum Initialisieren eines Schnittstellenbausteins eines Massenspeichermediums ausgeführt werden.

Nach erfolgreicher Ausführung sämtlicher zum Start des Betriebssystems 19 erforderlichen Firmwarekomponenten wird in einem Prozess 42 das Betriebssystem 19 des Computersystems in an sich bekannter Weise geladen. Beispielsweise kann das Betriebssystem 19 von dem Festplattenlaufwerk 14 des Computersystems 10 in den Arbeitsspeicher 12 geladen und von dem Prozessor 11 ausgeführt werden.

In den oben beschriebenen Arbeitsverfahren wird ein Bedienelement, insbesondere ein Einschalttaster 16, des Computersystems 10 auf eine zusätzliche Weise genutzt, um einen Startvorgang des Computersystems 10 zu vereinfachen und zu beschleunigen. Wird nach dem Starten des Computersystems 10 der Einschaltknopf für einen weiteren Zeitraum S von beispielsweise 1 bis 2 Sekunden gedrückt gehalten, so erkennt die Systemfirmware 18, dass der Anwender bei diesem Startvorgang die vollständige Bootsequenz des Computersystems 10 ausführen möchte. Die Systemfirmware 18 führt in diesem Fall Programmcode zur vollständigen Initialisierung und/oder Überprüfung des Computersystems 10 aus. Andernfalls wird nur ein Teil der Systemfirmware 18 ausgeführt, der zum beschleunigten Start des Computersystems 10 erforderlich ist. Beispielsweise kann auf die Initialisierung einer Tastatur und die Vorsehung einer separaten Wartezeit zur Abfrage einer Tastenkombination zum Aufrufen eines Einstellungsdialogs verzichtet werden.

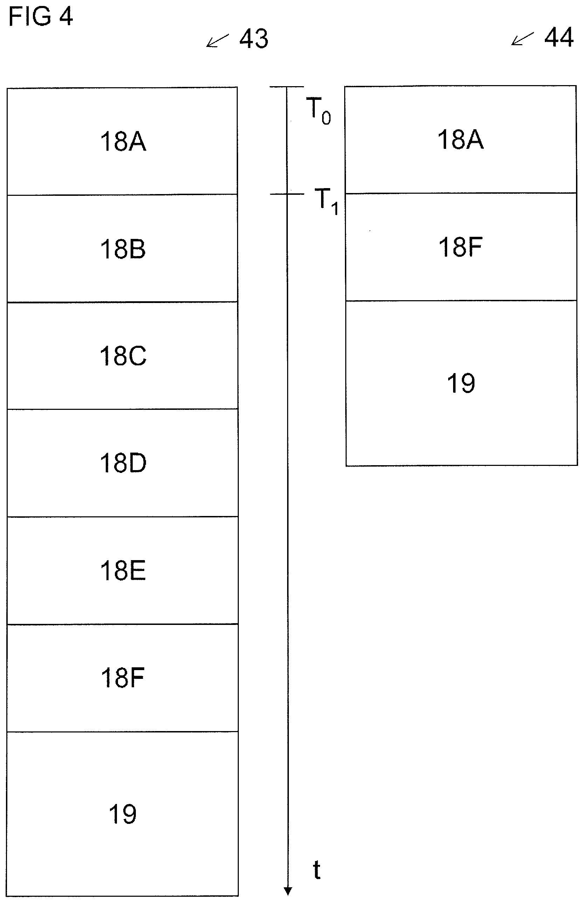

Figur 4 zeigt zwei Bootsequenzen, eine vollständige Bootsequenz 43 links und eine eingeschränkte Bootsequenz 44 rechts.

Die vollständige Bootsequenz 43 umfasst die Ausführung einer ersten Firmwarekomponente 18A zum Initialisieren des Prozessors 11 und der Arbeitsspeichers 12. Nachfolgend wird eine zweite Firmwarekomponente 18B zum Initialisieren einer Eingabekomponente ausgeführt, beispielsweise eines Treibermoduls zur Abfrage einer USB-Tastatur und/oder -Maus. Daran anschließend wird eine dritte Firmwarekomponente 18C zum Initialisieren einer Ausgabekomponente ausgeführt. Beispielsweise wird ein Textmodus oder einer VGA-Modus einer Grafikkarte aktiviert. Anschließend wird ein Selbsttest des Arbeitsspeichers 12 oder sonstiger Komponenten des Computersystems 10 durch eine Firmwarekomponente 18D durchgeführt. Durch die Firmwarekomponente 18E wird beispielsweise ein Einstellungsdialog oder die Auswahl eines Bootmediums vorgenommen. Durch eine letzte Firmwarekomponente 18F wird ein Nachladen des Betriebssystems 19 von einem Massenspeichermedium initiiert.

Die eingeschränkte Bootsequenz 44 umfasst lediglich die Ausführung der Systemfirmwarekomponenten 18A und 18F gefolgt von dem Booten des Betriebssystems 19. Eine Initialisierung von Komponenten des Computersystems 10, wie beispielsweise eines USB-Controllers oder einer Grafikkomponente, erfolgt dabei durch betriebssystemspezifische Treibermodule, die ohnehin als Teil des Betriebssystems 19 geladen werden.

Wie sich aus der Darstellung der Figur 4 ergibt, kann der Startvorgang des Computersystems 10 durch Verwendung der eingeschränkten Bootsequenz 44 verkürzt werden. Nach einem Start des Computersystem 10 zu einem ersten Zeitpunkt T₀ und Ausführung der ersten Firmwarekomponente wird zu einem zweiten Zeitpunkt T₁ entschieden, ob die vollständige Bootsequenz 43 oder die eingeschränkte Bootsequenz 44 durchgeführt werden soll.

### Bezugszeichenliste

- 10: Computersystem
- 11: Prozessor
- 12: Arbeitsspeicher
- 13: nichtflüchtiger Speicherbaustein
- 14: Festplattenlaufwerk
- 15: Ein-/Ausgabebaustein
- 16: Taster
- 17: Systembus
- 18: Systemfirmware
- 18A - 18F: Firmwarekomponente
- 19: Betriebssystem

- 20: erstes Arbeitsverfahren für ein Computersystem
- 21 - 26: Verfahrensschritte

- 30: zweites Arbeitsverfahren für ein Computersystem
- 31 - 42: Verfahrensschritte

- 43: vollständige Bootsequenz
- 44: eingeschränkte Bootsequenz

- T: Zeitraum
- S: vorbestimmter Zeitraum
- T₀: erster Zeitpunkt
- T₀: zweiter Zeitpunkt

## Patentansprüche

1. Arbeitsverfahren für ein Computersystem (10) mit einer Systemfirmware (18) und einem Taster (16), der niedergedrückt und losgelassen werden kann, zum Einschalten des Computersystems (10) mit den Schritten:
- Überwachen des Tasters (16) auf ein Niederdrücken durch einen mit einer Bereitschaftsspannung versorgten Ein-/Ausgabebaustein (15);
- Ausführen eines gemeinsamen ersten Teils einer vollständigen Bootsequenz (43) und einer eingeschränkten Bootsequenz (44), umfassend grundlegende Routinen einer Systemfirmware 18, unmittelbar nach dem Niederdrücken des Tasters (16);
- Bestimmen eines Zeitraums (T), zwischen dem Niederdrücken und einem Loslassen des Tasters (16) durch einen Zeitgeber, wobei der Schritt des Bestimmens des Zeitraums (T) nach Abschluss des gemeinsamen ersten Teils der Bootsequenzen (43, 44) durchgeführt wird;
- Ausführen einer ersten Teilmenge eines ausführbaren Programmcodes zum Ausführen der verbleibenden vollständigen Bootsequenz (43) durch die Systemfirmware (18), wenn der bestimmte Zeitraum (T) einen vorbestimmten Zeitraum (S) übersteigt, wobei der verbleibende Teil der vollständigen Bootsequenz (43) eine Initialisierung wenigstens einer Eingabekomponente des Computersystems (10), insbesondere die Aktivierung einer Tastatur und/oder Maus, umfasst; und
- Ausführen einer zweiten Teilmenge des ausführbaren Programmcodes zum Ausführen der verbleibenden eingeschränkten Bootsequenz (44) zum schnellen Starten des Computersystems (10) durch die Systemfirmware (18), wenn der bestimmte Zeitraum (T) den vorbestimmten Zeitraum (S) nicht übersteigt, wobei der verbleibende Teil der eingeschränkten Bootsequenz (44) keine Initialisierung der wenigstens einen Eingabekomponente umfasst.

2. Arbeitsverfahren nach Anspruch 1, bei dem nach Abschluss des ersten Teils ein zweiter und eine dritter Teil der vollständigen Bootsequenz (43) ausgeführt wird, wenn der bestimmte Zeitraum (T) den vorbestimmten Zeitraum (S) übersteigt, und entweder nur der zweite oder nur der dritte Teil der vollständigen Bootsequenz (43) als Teil der eingeschränkten Bootsequenz (44) ausgeführt wird, wenn der bestimmte Zeitraum (T) den vorbestimmten Zeitraum (S) nicht übersteigt.

3. Arbeitsverfahren nach einem der Ansprüche 1 oder 2, umfassend:
- Ansteuern einer Ausgabekomponente des Computersystems (10), insbesondere einer Leuchtdiode oder eines akustischen Signalgebers, wenn der Taster (16) für den vorbestimmten Zeitraum (S) betätigt wurde.

4. Arbeitsverfahren nach einem der Ansprüche 1 bis 3, bei dem die vollständige Bootsequenz das Anzeigen einer Tastenkombination und das Ausführen eines Einstellungsdialogs der Systemfirmware (18) umfassend das Anzeigen einer Einstellungsmaske nach Erkennen des Betätigens der zuvor angezeigten Tastenkombination umfasst.

5. Computersystem (10) umfassend:
- einen Taster (16), der niedergedrückt und losgelassen werden kann, zum Einschalten des Computersystems (10);
- eine mit einer Bereitschaftsspannung versorgten Überwachungsschaltung umfassend einen Ein-/Ausgabebaustein (15) und einen Zeitgeber zum Überwachen des wenigstens einen Tasters (16) auf ein Niederdrücken durch den Ein-/Ausgabebaustein (15) und Bestimmen eines Zeitraums (T), zwischen dem Niederdrücken und einem Loslassen des Tasters (16) durch einen Zeitgeber;
- wenigstens einen nichtflüchtigen Speicher zum Speichern einer Systemfirmware (18) umfassend ersten ausführbaren Programmcode; und
- wenigstens eine Datenverarbeitungsvorrichtung zum Ausführen von ausführbaren Programmcode, wobei ein gemeinsamer erster Teil einer vollständigen Bootsequenz (43) und einer eingeschränkten Bootsequenz (44), umfassend grundlegende Routinen der Systemfirmware 18, unmittelbar nach dem Niederdrücken des Tasters (16) ausgeführt wird und das Bestimmen des Zeitraums (T) nach Abschluss des gemeinsamen ersten Teils der Bootsequenzen (43, 44) durchgeführt wird und eine erste Teilmenge des ausführbaren Programmcodes zum Ausführen der verbleibenden vollständigen Bootsequenz (43) des Computersystems (10) durch die Datenverarbeitungsvorrichtung ausgeführt wird, wenn die Überwachungsschaltung anzeigt, dass der Taster (16) für einen Zeitraum (T) betätigt wurde, der länger ist, als ein vorbestimmter Zeitraum (S), wobei der verbleibende Teil der vollständigen Bootsequenz (43) eine Initialisierung wenigstens einer Eingabekomponente des Computersystems (10), insbesondere die Aktivierung einer Tastatur und/oder Maus, umfasst, und wobei eine zweite Teilmenge des ausführbaren Programmcodes zum Ausführen der verbleibenden eingeschränkten Bootsequenz (44) zum schnellen Starten des Computersystems (10) durch die Datenverarbeitungsvorrichtung ausgeführt wird, wenn die Überwachungsschaltung anzeigt, dass der Taster (16) für einen Zeitraum (T) betätigt wurde, der kürzer als der vorbestimmte Zeitraum (S) ist, wobei der verbleibende Teil der eingeschränkten Bootsequenz (44) keine Initialisierung der wenigstens einen Eingabekomponente umfasst.

6. Computersystem (10) nach Anspruch 5, umfassend:
- einen allgemeinen Ein-/Ausgabebaustein (15), wobei ein Eingabeanschluss des Ein-/Ausgabebausteins (15) mit einem Taster (16) zum Einschalten des Computersystems (10) verbunden ist und der Ein-/Ausgabebaustein (15) zum Überwachen des Tasters (16) auf das Niederdrücken eingerichtet ist.

7. Computersystem (10) nach Anspruch 6, umfassend:
- einen Zeitgeber, wobei der Zeitgeber bei dem Niederdrücken des Tasters (16) ausgelöst wird und bei dem Loslassen des Tasters (16) angehalten wird, um einen Betätigungszeitraum (T) des Bedienelements zu bestimmen.

8. Computersystem (10) nach einem der Ansprüche 5 bis 7, wobei die Systemfirmware (18) eine BIOS-Firmware oder eine UEFI-Firmware umfasst.

9. Computersystem (10) nach einem der Ansprüche 5 bis 8, bei dem die Länge des vorbestimmten Zeitraums (S) über den Einstellungsdialog der Systemfirmware (18) einstellbar ist.

10. Computersystem (10) nach einem der Ansprüche 5 bis 9, bei dem die vollständige Bootsequenz das Anzeigen einer Tastenkombination und das Ausführen eines Einstellungsdialogs der Systemfirmware (18) umfassend das Anzeigen einer Einstellungsmaske nach Erkennen des Betätigens der zuvor angezeigten Tastenkombination umfasst.

## Claims

1. Operating method for a computer system (10) having system firmware (18) and a push-button (16) which can be depressed and released, for switching on the computer system (10), comprising the steps:
- monitoring the push-button (16) for depression by means of an input/output module (15) supplied with a standby voltage;
- executing a common first part of a full boot sequence (43) and of a limited boot sequence (44), comprising basic routines of system firmware (18), immediately after the push-button (16) has been depressed;
- determining a time period (T) between depression and release of the push-button (16) by means of a timer, wherein the step of determining the time period (T) is carried out after completion of the common first part of the boot sequences (43, 44);
- executing a first subset of an executable program code for executing the remaining full boot sequence (43) by the system firmware (18) if the determined time period (T) exceeds a predetermined time period (S), wherein the remaining part of the full boot sequence (43) comprises an initialisation of at least one input component of the computer system (10), in particular the activation of a keyboard and/or mouse; and
- executing a second subset of the executable program code for executing the remaining limited boot sequence (44) for rapid start-up of the computer system (10) by the system firmware (18) if the determined time period (T) does not exceed the predetermined time period (S), wherein the remaining part of the limited boot sequence (44) does not comprise an initialisation of the at least one input component.

2. Operating method according to claim 1, in which, after completion of the first part, a second and a third part of the full boot sequence (43) is executed if the determined time period (T) exceeds the predetermined time period (S), and either only the second or only the third part of the full boot sequence (43) is executed as part of the limited boot sequence (44) if the determined time period (T) does not exceed the predetermined time period (S) .

3. Operating method according to either claim 1 or 2, comprising:
- activating an output component of the computer system (10), in particular a light-emitting diode or an acoustic signal generator, if the push-button (16) has been operated for the predetermined time period (S).

4. Operating method according to any one of claims 1 to 3, in which the full boot sequence comprises displaying of a key combination and the execution of a settings dialogue of the system firmware (18) comprising displaying of a settings screen after detection of the actuation of the previously displayed key combination.

5. Computer system (10), comprising:
- a push-button (16) which can be depressed and released, for switching on the computer system (10);
- a monitoring circuit, supplied with a standby voltage, comprising an input/output module (15) and a timer for monitoring the at least one push-button (16) for depression by the input/output module (15) and determining a time period (T) between depression and release of the push-button (16) by a timer;
- at least one non-volatile memory for storing system firmware (18) comprising first executable program code; and
- at least one data processing device for executing executable program code, wherein a common first part of a full boot sequence (43) and of a limited boot sequence (44), comprising basic routines of the system firmware (18), is executed immediately after the push-button (16) has been depressed, and the determination of the time period (T) is carried out after completion of the common first part of the boot sequences (43, 44) and a first subset of the executable program code for executing the remaining complete boot sequence (43) of the computer system (10) is carried out by the data processing device if the monitoring circuit indicates that the push-button (16) has been actuated for a time period (T) which is longer than a predetermined time period (S), wherein the remaining part of the full boot sequence (43) comprises an initialisation of at least one input component of the computer system (10), in particular the activation of a keyboard and/or mouse, and wherein a second subset of the executable program code for executing the remaining limited boot sequence (44) for rapid start-up of the computer system (10) is executed by the data processing device if the monitoring circuit indicates that the push-button (16) has been actuated for a time period (T) which is shorter than the predetermined time period (S), wherein the remaining part of the limited boot sequence (44) does not comprise an initialisation of the at least one input component.

6. Computer system (10) according to claim 5, comprising:
- a general input/output module (15), wherein an input port of the input/output module (15) is connected to a push-button (16) for switching on the computer system (10) and the input/output module (15) is adapted to monitor the push-button (16) for depression.

7. Computer system (10) according to claim 6, comprising:
- a timer, wherein the timer is started when the push-button (16) is depressed and is stopped when the push-button (16) is released in order to determine an actuation time period (T) of the operating element.

8. Computer system (10) according to any one of claims 5 to 7, wherein the system firmware (18) comprises BIOS firmware or UEFI firmware.

9. Computer system (10) according to any one of claims 5 to 8, in which the length of the predetermined time period (S) can be adjusted *via* the settings dialogue of the system firmware (18).

10. Computer system (10) according to any one of claims 5 to 9, in which the full boot sequence comprises displaying of a key combination and the execution of a settings dialogue of the system firmware (18) comprising the display of a settings screen after detection of the actuation of the previously displayed key combination.

## Revendications

1. Mode opératoire pour un système informatique (10) comprenant un firmware de système (18) et un bouton-poussoir (16), qui peut être enfoncé et relâché, pour mettre en marche le système informatique (10), comprenant les étapes :
- surveillance d'un enfoncement du bouton-poussoir (16) par un module d'entrée/sortie (15) alimenté au moyen d'une tension de veille ;
- exécution d'une première partie commune d'une séquence d'amorçage complète (43) et d'une séquence d'amorçage restreinte (44), comprenant des routines essentielles d'un firmware de système (18), directement après l'enfoncement du bouton-poussoir (16) ;
- détermination d'un laps de temps (T), entre l'enfoncement et un relâchement du bouton-poussoir (16), par une horloge, l'étape de détermination du laps de temps (T) étant effectuée après la fin de la première partie commune des séquences d'amorçage (43, 44) ;
- exécution d'un premier sous-ensemble d'un code de programme exécutable pour exécuter la séquence d'amorçage complète (43) restante par le firmware de système (18), quand le laps de temps (T) déterminé dépasse un laps de temps (S) prédéfini, la partie restante de la séquence d'amorçage complète (43) comprenant une initialisation d'au moins un composant d'entrée du système informatique (10), en particulier l'activation d'un clavier et/ou d'une souris ; et
- exécution d'un second sous-ensemble du code de programme exécutable pour exécuter la séquence d'amorçage restreinte (44) restante pour le démarrage rapide du système informatique (10) par le firmware de système (18), quand le laps de temps (T) déterminé ne dépasse pas le laps de temps (S) prédéfini, la partie restante de la séquence d'amorçage restreinte (44) ne comprenant pas d'initialisation de l'au moins un composant d'entrée.

2. Mode opératoire selon la revendication 1, dans lequel, après la fin de la première partie, une seconde et une troisième partie de la séquence d'amorçage complète (43) sont exécutées quand le laps de temps (T) déterminé dépasse le laps de temps (S) prédéfinie, et soit uniquement la seconde soit uniquement la troisième partie de la séquence d'amorçage complète (43) est exécutée comme une partie de la séquence d'amorçage restreinte (44) quand le laps de temps (T) déterminé ne dépasse pas le laps de temps (S) prédéfini.

3. Mode opératoire selon la revendication 1 ou 2,
comprenant :
- la commande d'un composant de sortie du système informatique (10), en particulier une diode électroluminescente ou un émetteur de signaux acoustiques, quand le bouton-poussoir (16) a été actionné pour le laps de temps (S) prédéfini.

4. Mode opératoire selon l'une des revendications 1 à 3, dans lequel la séquence d'amorçage complète comprend l'affichage d'une combinaison de touches et l'exécution d'un dialogue de paramétrage du firmware de système (18) comprenant l'affichage d'un masque de paramétrage après la détection de l'actionnement de la combinaison de touches affichée précédemment.

5. Système informatique (10), comprenant :
- un bouton-poussoir (16), qui peut être enfoncé et relâché, pour mettre en marche le système informatique (10) ;
- un circuit de surveillance alimenté au moyen d'une tension de veille comprenant un module d'entrée/sortie (15) et une horloge pour surveiller un enfoncement de l'au moins un bouton-poussoir (16) par le module d'entrée/sortie (15) et pour déterminer un laps de temps (T) entre l'enfoncement et un relâchement du bouton-poussoir (16), par une horloge ;
- au moins une mémoire non volatile pour enregistrer un firmware de système (18) comprenant un premier code de programme exécutable ; et
- au moins un dispositif de traitement de données pour exécuter du code de programme exécutable, une première partie commune d'une séquence d'amorçage complète (43) et d'une séquence d'amorçage restreinte (44), comprenant des routines essentielles du firmware de système (18), étant exécutée directement après l'enfoncement du bouton-poussoir (16) et la détermination du laps de temps (T) étant effectuée après la fin de la première partie commune des séquences d'amorçage (43, 44) et un premier sous-ensemble du code de programme exécutable étant exécuté pour exécuter la séquence d'amorçage complète (43) restante du système informatique (10) par le dispositif de traitement de données, quand le circuit de surveillance indique que le bouton-poussoir (16) a été actionné pour un laps de temps (T) qui est plus long qu'un laps de temps (S) prédéfini, la partie restante de la séquence d'amorçage complète (43) comprenant une initialisation d'au moins un composant d'entrée du système informatique (10), en particulier l'activation d'un clavier et/ou d'une souris, et un second sous-ensemble du code de programme exécutable étant exécuté pour exécuter la séquence d'amorçage restreinte (44) restante pour le démarrage rapide du système informatique (10) par le dispositif de traitement de données, quand le circuit de surveillance indique que le bouton-poussoir (16) a été actionné pour un laps de temps (T) qui est plus court que le laps de temps (S) prédéfini, la partie restante de la séquence d'amorçage restreinte (44) ne comprenant pas d'initialisation de l'au moins un composant d'entrée.

6. Système informatique (10) selon la revendication 5, comprenant :
- un module d'entrée/sortie (15) général, un raccordement d'entrée du module d'entrée/sortie (15) étant raccordé à un bouton-poussoir (16) pour mettre en marche le système informatique (10) et le module d'entrée/sortie (15) étant conçu pour surveiller l'enfoncement du bouton-poussoir (16) .

7. Système informatique (10) selon la revendication 6, comprenant :
- une horloge, l'horloge étant déclenchée lors de l'enfoncement du bouton-poussoir (16) et arrêtée lors du relâchement du bouton-poussoir (16), pour déterminer une durée d'actionnement (T) de l'élément de commande.

8. Système informatique (10) selon l'une des revendications 5 à 7, dans lequel le firmware de système (18) comprend un firmware BIOS ou un firmware UEFI.

9. Système informatique (10) selon l'une des revendications 5 à 8, dans lequel la longueur du laps de temps (S) prédéfini peut être paramétrée par le biais du dialogue de paramétrage du firmware de système (18).

10. Système informatique (10) selon l'une des revendications 5 à 9, dans lequel la séquence d'amorçage complète comprend l'affichage d'une combinaison de touches et l'exécution d'un dialogue de paramétrage du firmware de système (18) comprenant l'affichage d'un masque de paramétrage après la détection de l'actionnement de la combinaison de touches affichée précédemment.
